# EUROPÄISCHE PATENTSCHRIFT

(11) **EP 2 277 210 B1**
(45) Veröffentlichungstag und Bekanntmachung des Hinweises auf die Patenterteilung: **20.06.2012**
(21) Anmeldenummer: 09738077.8
(22) Anmeldetag: 24.04.2009
(51) Int. Cl.: H01L 41/09

(54) **ROTATIONSANTRIEB**
ROTATIONAL DRIVE
MÉCANISME D'ENTRAÎNEMENT EN ROTATION

(30) Priorität: 02.05.2008 DE 102008021904
(43) Veröffentlichungstag der Anmeldung: 26.01.2011
(73) Patentinhaber: Noliac A/S, 3490 Kvistgaard (DK)
(72) Erfinder: GOTTLIEB, Bernhard, 81739 München (DE); KAPPEL, Andreas, 85649 Brunnthal (DE); WALLENHAUER, Carsten, 01987 Schwarzheide (DE)
(74) Vertreter: Inspicos A/S
(86) Internationale Anmeldenummer: PCT/EP2009/054978
(87) Internationale Veröffentlichungsnummer: WO 2009/133033

(56) Entgegenhaltungen:
- DE-A1- 10 017 138
- DE-A1-102006 032 993
- US-A- 5 747 915

## Beschreibung

Die deutsche Offenlegungsschrift DE 10 2006 044 000 A1 beschreibt einen piezoelektrischen Mikroschrittantrieb. Der Aufbau eines rotatorischen Stellantriebs erfolgt mittels piezoelektrischer Biegeaktoren, welche über Festkörpergelenke an einem Antriebskörper gelagert sind. Eine Längserstreckung der Biegeaktoren verläuft im wesentlichen parallel zu einer Wellenachse einer mit dem Antriebskörper anzutreibenden Welle.

Ein piezoelektrischer Schrittantrieb mit Rahmenkinematik ist beschrieben in der deutschen Patentanmeldung mit dem amtlichen Anmeldeaktenzeichen 10 2007 023 199.9. Ein piezoelektrischer Schrittantrieb mit Diagonalkinematik ist beschrieben in der deutschen Patentanmeldung mit dem amtlichen Anmeldeaktenzeichen 10 2007 023 200.6. Ein weiterer derartig aufgebauter piezoelektrischer Schrittantrieb ist beschrieben in der deutschen Patentanmeldung mit dem amtlichen Anmeldeaktenzeichen 10 2007 023 210.4.

DE 103 22 836 A1 beschreibt einen rotatorischen Stellantrieben in Ausgestaltung eines inkrementellen Antriebs für Zeigerinstrumente eines Kraftfahrzeugs. Dieser weist einen ringförmigen Antriebskörper und eine im Antriebskörper rotierbaren Antriebsscheibe auf. Die einander zugewandten Wandungen des Antriebskörpers und der Antriebsscheibe weisen ineinander eingreifende Zahnungen auf und die Antriebsscheibe ist rotationsfest mit einer Welle verbunden.

Den beschriebenen rotatorischen Stellantrieben ist gemeinsam, dass jeweils ein in einer Ebene beweglicher Antriebsring mit Innenverzahnung relativ zu einer ortsfest, aber drehbar gelagerten Welle mit angepaßter Außenverzahnung bewegt wird. Außerdem führen die Anordnungen der Bauelemente, insbesondere der Ring als Eingriffskörper, die Welle, Biegeaktoren, Biegefedern und mechanische Übertrager als Flexstrukturen zu in der Fläche als einer Bewegungsebene des Eingriffskörpers ausgedehnten Stellantrieben mit geringer Dicke senkrecht zur Bewegungsebene des Eingriffskörpers.

Lediglich bei der deutschen Patentanmeldung mit dem amtlichen Aktenzeichen 10 2006 044 000 werden Bauelementeanordnungen gezeigt, die zu in der Fläche kompakteren und in der Dicke parallel zur Wellenachse ausgedehnten Antrieben führen und die in ein Gehäuse mit einer zylindrischen Außenkontur integrierbar sind. Der so entstehende zylindrische Antrieb ist aufgrund der seitlich tangential an den Eingriffskörper angebunden Biegeaktoren und Flexstrukturen dennoch wenig kompakt. Bei DE 103 22 836 A1 wäre eine Drehung der Biegeaktor- und Biegefederelemente um 90° bezogen auf eine in der Blattebene liegende jeweils radiale Achse denkbar, würde aber entsprechend letztendlich zu einem wenig kompakten zylindrischen Antrieb führen.

Ein weiteres Beispiel findet sich in US 5747915. Die Aufgabe der Erfindung besteht darin, einen kompakteren Rotationsantrieb vorzuschlagen. Insbesondere soll ein Aufbau eines kompakten rotatorischen Präzisionsstellantriebes mit zylindrischer Außenkontur basierend auf Festkörperbiegeaktoren ermöglicht werden.

Diese Aufgabe wird gelöst durch einen Rotationsantrieb mit den Merkmalen gemäß Patentanspruch 1. Vorteilhafte Ausgestaltungen sind Gegenstand abhängiger Ansprüche.

Ausgegangen wird von einem Rotationsantrieb, der eine Welle, die in einem zu einem Basiselement ortsfesten Lager gelagert ist, einen ring- oder zylinderförmigen Eingriffskörper und eine innerhalb des Eingriffskörpers liegende Eingriffsscheibe mit einer mit einer Eingriffskörper-Innenwandung korrespondierenden und in Eingriff tretbaren Eingriffsscheiben-Außenwandung aufweist, wobei der Eingriffskörper und/oder die Eingriffsscheibe eine Antriebsebene ausbilden. Der Rotationsantrieb weist außerdem zumindest zwei elektromechanische Aktoren auf, deren Wirkrichtung jeweils mit einer Bewegungskomponente parallel zur Antriebsebene und mit der jeweiligen Bewegungskomponente relativ zueinander orthogonal verläuft in der Antriebsebene, wobei ein Bewegungsbereich der Aktoren durch das Zusammenwirken des Eingriffskörpers und der Eingriffsscheibe beschränkt wird. Vorteilhaft wird der Rotationsantrieb dadurch, dass eine Antriebsplatte mit einer Bewegungskomponente in einer Ebene parallel zur Antriebsebene verschiebbar gelagert ist und mittels der Kraft- und/oder Bewegungskomponenten der Aktoren parallel zur Antriebsebene und relativ zu dem Basiselement verstellbar ist, und dadurch, dass die Welle vom ortsfesten Lager beabstandet koaxial und rotationsfest mit der Eingriffsscheibe ausgebildet ist und spielfrei aber drehbar in einem Antriebsplattenlager in der Antriebsplatte gelagert ist. Unter der Bewegungskomponente wird dabei zweckmäßig eine Haupt-Bewegungskomponente verstanden, so dass z.B. auch eine verkippte Antriebsplatte noch berücksichtigt wird, welche zusätzlich geringfügig in Richtung einer Bewegungskomponeten quer zur Haupt-Bewegungskomponente verstellt wird.

Bevorzugt sind die Aktoren und die Antriebsplatte derart gekoppelt, dass mittels der Aktoren die Antriebsplatte zu einer kreisförmig translatorischen Verschiebebewegung angregbar ist und darüber die Welle und die Eingriffsscheibe so zu einer kreisförmig translatorischen Verschiebebewegung angregbar sind, dass die Eingriffsscheiben-Außenwandung der Eingriffsscheibe in der Eingriffskörper-Innenwandung des Eingriffskörpers abrollt und dass durch den Eingriff der Eingriffsscheiben-Außenwandung und der Eingriffskörper-Innenwandung die mit der Eingriffsscheiben-Außenwandung drehfest verbundene Welle in Rotation versetzbar ist.

Die Welle ist bevorzugt in einem Abschnitt zwischen dem ortsfesten Lager und dem mit der Antriebsplatte transversal bewegbaren Antriebsplattenlager seitlich ihrer Wellenachse gelenkig oder biegbar ausgebildet. Eine solche Biegbarkeit kann durch ein Gelenk oder eine Materialschwächung ausgebildet sein. Vorzugsweise ist die Welle in dem biegbaren Abschnitt möglichst torsionssteif ausgebildet, so dass nur eine seitliche bzw. radiale Biegung, nicht aber eine Verdrehung um die Wellenachse ermöglicht wird. Insbesondere weist die Welle Festkörpergelenke auf, so dass die Transversalbewegung nahezu kräftefrei erfolgt, aber gleichzeitig ihre Torsionssteifigkeit nicht oder nur unwesentlich geschwächt wird.

Bevorzugt wird, wenn die Welle einen weiteren gelenkigen oder biegbaren Abschnitt aufweist, der beabstandet zu dem gelenkig oder biegbar ausgebildeten Abschnitt zwischen dem ortsfesten Lager und dem mit der Antriebsplatte transversal bewegbaren Antriebsplattenlager seitlich ihrer Wellenachse gelenkig oder biegbar ausgebildet ist. Vorteilhaft ist der Einsatz mehrerer derartiger Gelenkanordnungen, welche auch zueinander beabstandet über die Länge der Welle verteilt angeordnet sein können. Eine beabstandete Anordnung reduziert einen mechanischen Widerstand der Welle gegen eine durch die Aktoren angestrebte Parallelführung der beiden Wellenlager.

Die Welle kann aus Sicht der Antriebsplatte axial in Richtung der Wellenachse über das ortsfest Lager hinaus verlängert sein und am verlängerten Abschnitt der Welle ist bevorzugt ein anzutreibendes Element so angekoppelt, dass das anzutreibende Element derart relativ zum Basiselement angeordnet ist, dass von außen auf die Welle einwirkende Querkräfte abgefangen werden.

Die elektromechanischen Aktoren sind bevorzugt piezoelektrische Aktoren, elektrostriktive Aktoren oder magnetostriktive Aktoren. Die elektromechanischen Aktoren sind insbesondere Biegeaktoren in Streifenform. Die Aktoren sind bevorzugt in einem Abschnitt zwischen der Antriebsplatte und dem ortsfesten Lager in ihrer Biege- oder Längsdimension in etwa parallel zur Wellenachse ausgerichtet. Dadurch wird eine besonders kompakte zylindrische Bauform ermöglicht.

Bevorzugt ist zumindest einer der Aktoren, insbesondere sind alle der Aktoren, mittels eines gelenkigen Abschnitts an der Antriebsplatte und/oder relativ zum Basiselement befestigt. Solche gelenkige Abschnitte sind bevorzugt als schersteife Festkörperkugelgelenke oder schersteife radiale Festkörpergelenke ausgebildet. Vorteilhaft dient dies zur Entkopplung der Wirkungen der Aktoren auf die Antriebsplatte mittels solcher schersteifer Festkörperkugelgelenke an der Antriebsplatte und mittels schersteifer radialer Festkörpergelenke am entgegengesetzten Ende ortsfest. Umgekehrt können die Aktoren auch mittels schersteifer radialer Festkörpergelenke an der Antriebsplatte und mittels schersteifer Festkörperkugelgelenke am entgegengesetzten Ende ortsfest befestigt sein.

Jeweils zwei im Bezug auf die Welle einander gegenüberliegende Aktoren bilden bevorzugt ein Paar von orthogonal wirkenden Biegeaktoren, die in ihrer Längsdimension in etwa parallel zur Wellenachse ausgerichtet sind. Dadurch kann eine kompakte zylindrische Bauform bei gesteigerter mechanischer Leistung erzielt werden und es wird eine bevorzugt Parallelführung der der Antriebsplatte in der Antriebsebene erzielt.

Ausgestattet ist ein solcher Rotationsantrieb bevorzugt mit einer Steuereinrichtung, die ausgebildet und/oder programmiert ist zum Ansteuern der kreisförmigen Verschiebebewegung derart, dass bei jeder beliebigen kreisförmig translatorischen Position, insbesondere Winkelposition der Antriebsplatte oder der Eingriffsscheibe relativ zum Eingriffskörper die kreisförmige Verschiebebewegung im Millisekundenbereich gestoppt, neu gestartet oder reversiert werden kann. Bevorzugt ist dies im Millisekundenbereich, d.h. nahezu ohne Totzeit und vorzugsweise schneller als eine Millisekunde möglich.

Der ring- oder zylinderförmige Eingriffskörper weist bevorzugt eine Innenverzahnung auf und die Eingriffsscheibe weist eine dazu korrespondierende Außenverzahnung auf.

Die Welle weist bevorzugt einen gelenkigen Abschnitt aus zwei orthogonal zueinander und senkrecht zur Wellenachse wirkenden, hintereinander angeordneten Festkörpergelenken auf. Ein derart gebildetes Festkörperkugelgelenk verhält sich mechanisch drehsteif bezüglich der Drehmomentübertragung in der Wellenachse.

Es entsteht ein stark untersetzter getriebeloser Stellantrieb mit relativ hohem Drehmoment. Durch die Verzahnung und die Möglichkeit innerhalb einer Sinusperiode elektrisch beliebig fein interpolieren zu können, wird eine quasi unendlich hohe Winkelauflösung erreicht, bei gleichzeitig hoher Wiederholgenauigkeit und hoher absoluter Positioniergenauigkeit. Aufgrund der bevorzugten Anordnung der funktionellen Komponenten entsteht ein sehr kompakter Stellantrieb in Zylinderform. Die kompakte Zylinderform ist insofern von Vorteil, als dass konventionelle elektrodynamische Stellantriebe üblicherweise Zylinderform aufweisen und daher eine direkte Substitution des konventionellen Antriebs durch den vorteilhaften Antrieb erleichtert wird.

Ein Ausführungsbeispiel wird nachfolgend anhand der Zeichnung näher erläutert. Es zeigen:
- Fig. 1: eine Schnittansicht eines zylindrischen Rotationsantriebs,
- Fig. 2: verschiedene Schnittansichten und Ausschnittsvergrößerungen zu der Schnittansicht gemäß Fig. 1,
- Fig. 3: eine perspektivische Seitenansicht eines solchen zylindrischen Rotationsantriebs,
- Fig. 4: eine Basisplatte eines solchen Rotationsantriebs mit Befestigungselementen für Biegeaktoren,
- Fig. 5: ein Antriebselement zum Lagern und Antreiben einer Welle in eine translatorische Bewegung,
- Fig. 6: perspektivisch eine derartige Welle,
- Fig. 7: einen beispielhaften Aktor in Form eines bevorzugten Biegeaktors und
- Fig. 8: Komponenten einer Antriebseinheit eines solchen Rotationsantriebs in einer ausgelenkten Stellung.

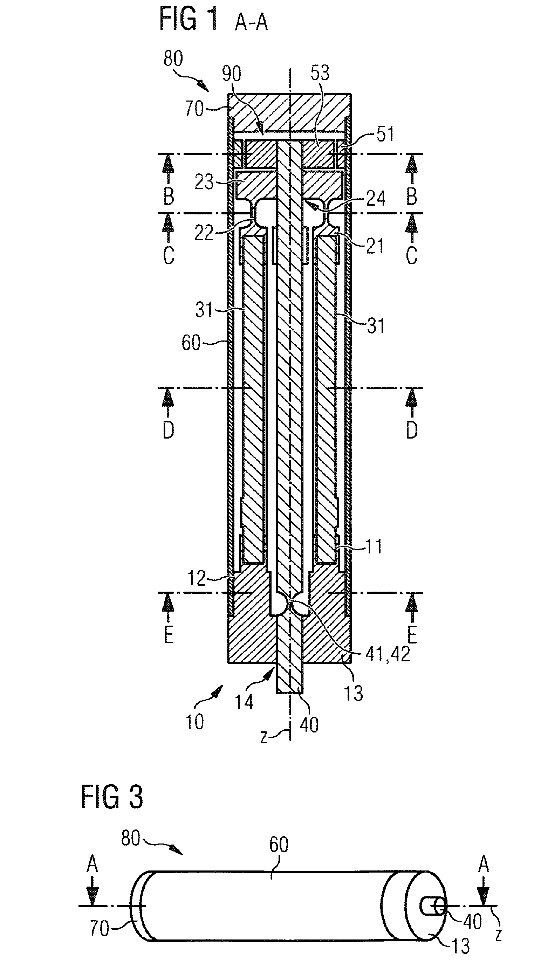

Anhand Fig. 1 sowie teilweise anhand der weiteren Figuren im genaueren Detail werden die funktionellen Komponenten des bevorzugten Rotationsantriebs einzeln und in ihrem Zusammenwirken beschrieben. Ein fertig montierter Rotationsantrieb ist in Fig. 3 skizziert.

Wie insbesondere aus Fig. 1 ersichtlich ist, umfasst ein derartiger Rotationsantrieb 80 eine Vielzahl einzelner Komponenten. Ein im Betrieb ortsfestes Basiselement 10 weist eine Basisplatte 13 mit einem zentralen ortsfesten Lager 14 zum Lagern einer Welle 40 auf. Außerdem sind an der Basisplatte 13 parallel zur Welle 40 verlaufend Aktoren 31 in Form von Biegeaktoren befestigt. Die Aktoren 31 sind dabei mit einem ruhenden Ende 33 an der Basisplatte 13 befestigt. Ein gegenüberliegendes bewegtes Ende 34 der Aktoren 31 ist an einer Antriebsplatte 23 eines Antriebselements 20 befestigt. In der Antriebsplatte 23 ist ein Antriebsplatten-Lager 24 in Form einer Zentralbohrung zum Hindurchführen der Welle 40 ausgebildet.

Ein Gehäuse 60 in vorzugsweise zylindrischer Form führt von dem Basiselement bzw. der Basisplatte 13 achsparallel zu einer Wellenachse z der Welle 40 in der Richtung der Aktoren 31, wobei das Gehäuse 60 soweit erstreckend ausgebildet ist, dass es die Aktoren 31, das Antriebselement 20 und weitere jenseits des Antriebselements 20 gelegene Komponenten umschließt. Das Gehäuse 60 ist dabei aus einem starren Material ausgebildet, so dass es ortsfest zu dem Basiselement 10 ist.

Innenseitig des Gehäuses 60 ist ein Eingriffskörper 51 ausgebildet, welcher als ringförmige oder zylindrische Komponente innenseitig des Gehäuses 60 angeordnet oder geformt ist. Die Welle 40 ragt durch die Antriebsplatte 23 hindurch bis auf Höhe des Eingriffskörpers 51. Auf Höhe des Eingriffskörpers 51 weist die Welle 40 eine Eingriffsscheibe 53 auf, deren Außenumfang geringfügig geringer als ein Innenumfang des Eingriffskörpers 51 ist. Die einander zugewandten Flächen des Eingriffskörpers 51 und der Eingriffsscheibe 53 sind so ausgebildet, dass sie in Eingriff miteinander treten können, beispielsweise also eine Zahnung aufweisen oder einen hohen Reibungswiderstand aufweisen.

Vorzugsweise ist das über den Eingriffskörper 51 hinausragende Ende des Gehäuses 60 mit einem Deckel 70 verschlossen.

Zumindest zwei Aktoren 31 sind derart unter einem Winkel ausgerichtet, dass deren Bewegungskomponenten bei einer Verbiegung der Aktoren 31 in einer zueinander senkrechten Beziehung stehen. Dadurch kann die Antriebsplatte 23 mit der darin gelagerten Welle 40 relativ zu der Basisplatte 13 in eine translatorische kreisförmige Bewegung versetzt werden, so dass die Eingriffsscheibe 53 auf dem Eingriffskörper 51 an einem Punkt anliegt und auf der Innenfläche des Eingriffskörpers 51 abrollt. Dies führt zu einer Rotation der Eingriffsscheibe 53 und der damit drehfest verbundenen Welle 40 .

Zur Unterstützung der Bewegung sind im Befestigungsbereich der Aktoren 31 zu der Antriebsplatte 23 und zu der Basisplatte 13 vorzugsweise Gelenke ausgebildet, insbesondere Festkörperkugelgelenke 22 bzw. Festkörpergelenke 15.

Während die Schnittdarstellung eine Ruhestellung zeigt, bei welcher die Welle 40 nicht ausgelenkt längs ihrer Wellenachse z verläuft, wird die Antriebsplatte 23 beim Betrieb somit in einer Antriebsebene x, y in eine translatorische Verschiebebewegung versetzt, welche über die Welle 40 auf die Eingriffsscheibe 23 übertragen wird. Durch den Eingriff der Eingriffsscheibe 53 mit dem Eingriffskörper 51 wird letztendlich die Welle 40 relativ zu dem ortsfesten Basiselement 10 in eine Rotation versetzt.

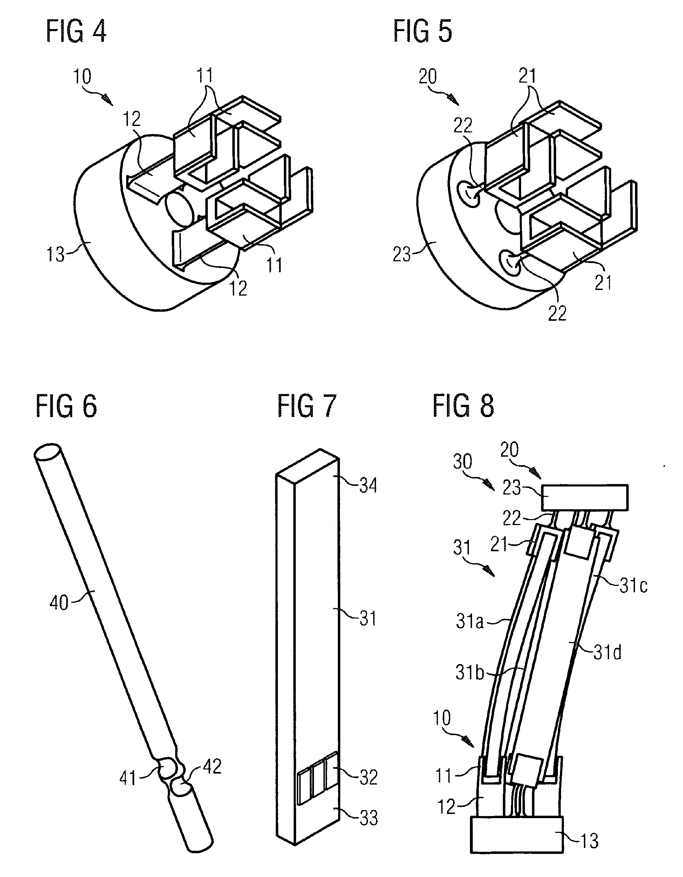

Fig. 1 zeigt somit eine zum Aufbau des erfindungsgemäßen Rotationsantriebs aus den vorzugsweise vier Aktoren 31, dem Basiselement 10 und dem Antriebselement 20 zusammengesetzte Antriebseinheit 30. Die Antriebseinheit 30 ist so aufgebaut, dass im dargestellten spannungsfreien bzw. unbestromten Grundzustand der vier Aktoren 31 die Zentralbohrung als das ortsfeste Lager 14 der Basisplatte 13 und die Zentralbohrung als Antriebsplatten-Lager 24 der Antriebsplatte 23 koaxial zueinander ausgerichtet sind. Je zwei einander gegenüberliegende der vier in Fig. 2 D-D und Fig. 8 skizzierten Aktoren 31a, 31c und 31b, 31d weisen eine zueinander parallele Wirkrichtung auf. Sie werden elektrisch so angesteuert, dass sie sich in ihrer Wirkung verstärken. Zueinander benachbarte der Aktoren 31a, 31b bzw. 31b, 31c bzw. 31c, 31d bzw. 31d, 31a sind hingegen zueinander orthogonal orientiert.

Die Anordnung der Festkörpergelenke 15 am Basiselement 10 und der Festkörperkugelgelenke 22 im Antriebselement stellt sicher, dass sich die in orthogonale Richtungen zueinander wirkenden Paare von Biegeaktoren in ihrer Wirkung gegenseitig nicht oder nur unwesentlich behindern. Die je Wirkrichtung paarweisen und mit Abstand parallel angeordneten Biegeaktoren als den Aktoren 31 bilden zugleich eine gute Parallelführung der Antriebsplatte 23 in Bezug auf die Basisplatte 13 aus. Da die Festkörpergelenke 15 und Festkörperkugelgelenke 22 gegenüber Scherkräften mechanisch hinreichend steif dimensioniert sind, wird im Fall einer Fixierung der Antriebsplatte 23 im Bezug auf die Basisplatte 13 in jede der orthogonalen Wirkrichtungen der Aktoren 31 bei elektrischer Ansteuerung eine Kraft erzielt, die annähernd dem Idealwert in Höhe der zweifachen Blockierkraft FB eines einzelnen der Aktoren 31 entspricht.

Ein zylindrischer Deckel 70 dient zum verzahnungsseitigen Verschluss des Gehäuses 60.

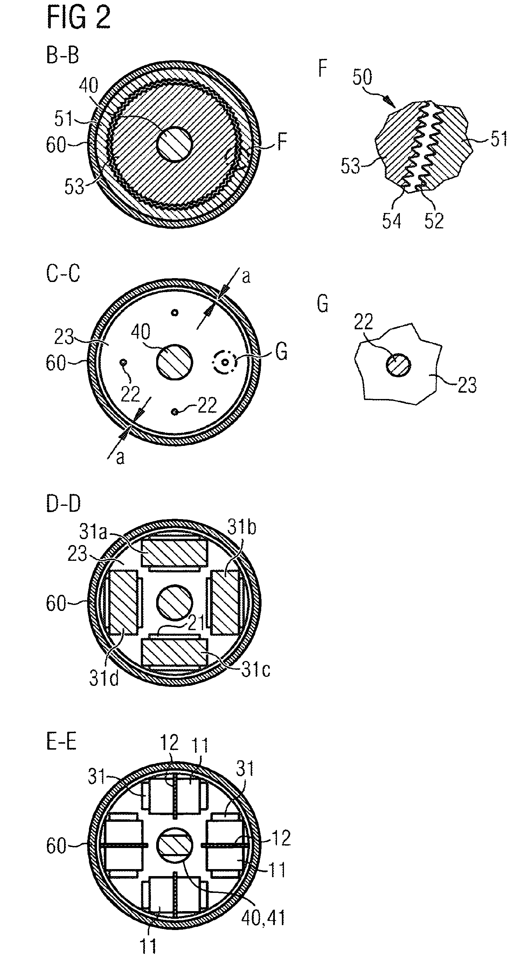

Für einen antreibenden Eingriff reicht zwischen der Eingriffsscheiben-Außenwandung und der Eingriffskörper-Innenwandung eine zwischen diesen wirkende Reibung prinzipiell aus. Bevorzugt wird jedoch eine Verzahnungspaarung 50 an diesen. Fig. 2F zeigt eine zum Aufbau des Rotationsantriebs besonders geeignete zylindrische Verzahnungspaarung 50. Die Verzahnungspaarung 50 besteht aus einem zylindrischen Eingriffskörper 51 mit Innenverzahnung 52 und einer zylindrischen Eingriffsscheibe 53 mit einer zur Innenverzahnung 52 passenden Außenverzahnung 54 als einem Rotor. Die Eingriffsscheibe 53 besitzt zur drehsteifen, axialen Befestigung der Welle 40 an dem von der Basisplatte 13 abgewandeten Ende, eine axiale Zentralbohrung 55. Die miteinander verbundene Welle 40 und Eingriffsscheibe 53 bilden den Rotor 90 aus. Eine Außenfläche bzw. Außenwandung 56 des Eingriffskörpers 51 ist so gestaltet, dass der Eingriffskörper 51 axial und drehsteif in das hohlzylindrische Gehäuse 60 einbaubar ist.

Die Auslegung der Innenverzahnung 52 und der Außenverzahnung 54 hinsichtlich ihres Grunddurchmessers, der Zähnezahlen, d.h. des Übertragungsverhältnisses, der Zahnbreite und Zahnhöhe sowie der Zahnform erfolgt einerseits angepasst auf die abtriebsseitig an der Welle 40 erforderliche Drehzahl und das Drehmoment und andererseits abgestimmt auf die Leistungsdaten, z.B. Leerlaufauslenkung und Blockierkraft der eingesetzten Aktoren 31. Z.B. wird die die Auslenkung der Biegeaktoren groß genug gewählt, um sicher gewährleisten können, dass die Verzahnungspaarung von Eingriffskörper 51 und Eingriffsscheibe 53 an gegenüberliegenden Positionen an ihrem Umfang in und außer Eingriff gebracht werden können.

Das bevorzugte Gehäuse 60 ist ein hohlzylindrisches Gehäuse. Es dient zur mechanisch hinreichend steifen und positionsgenauen Montage der Motorkomponenten und zur Befestigung und Drehmomentübertragung des Antriebs im anzutreibenden System.

Fig. 4 zeigt das Basiselement 10 in besonders bevorzugter Ausgestaltung. Das Basiselement 10 besteht aus vier bezüglich einer Symmetrieachse jeweils um 90° versetzt angeordneten Aufnahmen 11 zur mechanisch steifen Befestigung der Aktoren 31 an ihrem ruhenden Ende 33. Die vier Aufnahmen 11 sind jeweils über eine radial orientierte Rippe als dem Festkörpergelenk 15 an der vorzugsweise zylindrischen Basisplatte 13 befestigt. Die radial orientierten Rippen sind so dimensioniert, dass sie sich bezüglich radial wirkender Kräfte mechanisch steif verhalten und sich bezüglich tangentialer Biegekräfte bzw. Drehmomente zwischen der jeweiligen Aufnahme 11 und der Basisplatte 13, wie ein Gelenk bzw. Festkörpergelenk 15 verhalten. Solche Festkörpergelenke 15 basieren auf Biegung, wobei ein relativ kurzer Abschnitt, hier die Rippe, in der Wandstärke gezielt geschwächt wird. Um die Lage der "Drehachse" gut zu definieren und um die Gesamtsteifigkeit des Aufbaus gegenüber anderen Belastungen, wie z.B. Scherkräften nicht nennenswert zu beeinträchtigen, wird der Biegebereich bevorzugt klein gehalten. Die radiale Orientierung der Rippen als Festkörpergelenken 15 entspricht der Wirkrichtung der in den zugehörigen Aufnahmen 11 befestigten Aktoren 31. Die Aufnahmen 11 mit den zugehörigen Rippen bilden daher die ortsfeste und drehsteife Fixierung des ruhenden Endes der Aktoren bezüglich ihrer Wirkrichtung an der Basisplatte 13.

Die Basisplatte 13 enthält als das Lager 14 eine axiale Zentralbohrung, die nach erfolgtem Zusammenbau im Zusammenwirken mit der zylindrischen Oberfläche der Welle 40 eine spielfreie aber leicht drehbare Drehlagerung bildet.

Fig. 5 zeigt das zum Basiselement 10 korrespondierendes Antriebselement 20. Es besteht aus vier bezüglich einer Symmetrieachse jeweils um 90° versetzt angeordneten Aufnahmen 21, die der mechanisch steifen Befestigung der Biegeaktoren 31 an ihrem bewegten Ende 34 dienen. Die vier Aufnahmen 21 sind über jeweils einen Biegestab als dem Festkörperkugelgelenk 22 an der zylindrischen Antriebsplatte 23 befestigt. Die Biegestäbe sind so dimensioniert, dass sie sich bezüglich radial und tangential wirkender Biegekräfte bzw. Drehmomente, wie ein Kugelgelenk verhalten. Die Festkörperkugelgelenke 22 basieren auf Biegung in zwei zueinander orthogonalen Richtungen, wobei ein relativ kurzer Abschnitt in Form des Stabs in der Wandstärke in zwei orthogonalen Dimensionen gezielt geschwächt wird, um leicht biegbar zu werden. Der Biegebereich wird aber vorzugsweise klein gehalten, um die Lage des "Drehpunktes" gut zu definieren und um die Gesamtsteifigkeit des Aufbaus gegenüber anderen Belastungen, wie z.B. Scherkräften, nicht nennenswert zu beeinträchtigen. Die Aufnahmen 21 mit den zugehörigen Biegestäben bilden daher die Gelenklagerung des bewegten Endes 34 der Biegeaktoren 31 an der Antriebsplatte 23.

Die Antriebsplatte 23 enthält eine axiale Zentralbohrung als Antriebsplatten-Lager 24, die nach erfolgtem Zusammenbau im Zusammenwirken mit der zylindrischen Oberfläche der Welle 40 eine spielfreie aber leicht drehbare Drehlagerung bildet. Die Antriebsplatte 23 und das Gehäuse 60 sind so dimensioniert, dass in radialer Richtung zwischen der Außenseite der Antriebsplatte 23 und einer Innenwandung des Gehäuses 60 ein in Fig. 2 C-C skizzierter freier Abstand a verbleibt, der so groß ist, dass die Außenseite der Antriebsplatte 23 und die Innenwandung des Gehäuses 60 im Betrieb beabstandet bleiben, zumindest aber nicht in Reibschluss oder in Eingriff treten.

Fig. 6 zeigt eine bevorzugte zylindrische Welle 40, welche zwei orthogonal zueinander und senkrecht zur Wellenachse z wirkende Festkörpergelenke 41, 42 aufweist. Die Festkörpergelenke 41, 42 sind bevorzugt direkt hintereinander angeordnet. Aufgrund des kurzen axialen Abstandes der Festkörpergelenke 41, 42 ergänzen sich beide in ihrer Wirkung zu einem Festkörperkugelgelenk mit der Besonderheit, dass ein derart gebildetes Festkörperkugelgelenk sich mechanisch drehsteif bezüglich der Drehmomentübertragung in der Wellenachse z verhält.

Fig. 7 zeigt als beispielhaften Aktor 31 einen zum Aufbau des zylindrischen Rotationsantriebs bevorzugten piezoelektrischen Biegeaktor. Biegeaktoren besitzen üblicherweise die dargestellte Streifenform. Typische Dimensionen liegen im Bereich der Breite von 1 mm bis 10 mm, im Bereich der Dicke von 0,2 mm bis 5,0 mm und im Bereich der Länge von 5 mm bis 100 mm.

Zur elektrischen Kontaktierung der Aktoren 31 und zum Anbringen von Verbindungsleitungen zu einer Spannungsquelle können Lötpads 32 aufgebracht werden. Piezoelektrische Bimorph-Biegeaktoren als die Aktoren 31 benötigen mindestens drei elektrische Anschlüsse. Zur Reduktion eines nötigen Steuerspannungsniveaus werden häufig piezoelektrische Biegeaktoren in Vielschichttechnik eingesetzt. Typische Betriebsspannungen bei Vielschichtbiegeaktoren liegen je nach Schichtdicke im Bereich von ca. 10 bis 100 V.

Festkörperbiegeaktoren und insbesondere piezoelektrische Biegeaktoren werden von verschieden Herstellern als Standard Katalogware angeboten oder auf Kundenwunsch hin individuell konfektioniert. Wird ein Biegeaktor als der Aktor 31 einseitig an seinem ruhenden Ende 33 ortsfest und nicht drehbar festgehalten, was symbolisiert ist durch Dreiecke in Fig. 7, und elektrisch angesteuert, so wird sein entgegengesetztes freibewegliches bewegtes Ende 34 proportional zur angelegten elektrischen Spannung seitlich um eine Leerlaufauslenkung x0 ausgelenkt. Dabei vollzieht der Aktor 31 eine Biegung, die einer gekrümmten Biegelinie folgt. Am bewegten Ende 34 des elektrisch angesteuerten Aktors 31 weicht die Tangentenrichtung an dem Aktor bzw. an seiner Biegelinie von derjenigen an seinem ruhenden Ende 33 ab. Das freibewegliche bewegte Ende des Biegeaktors 34 vollzieht insofern eine Drehung. Die sich einstellende Biegelinie und damit die erzielbaren Leistungsdaten des Aktors 31 im verbauten Zustand hängen empfindlich von der realisierten mechanischen Einbaubedingung als Randbedingung an die Biegelinie ab.

Wird das bewegte Ende 34 des Aktors 31 ebenfalls ortsfest, aber drehbar, d.h. die Tangentenrichtung der Biegelinie kann sich frei einstellen und wird nicht von der mechanischen Anbindung festgelegt, fixiert bzw. blockiert, so erzeugt der Aktor 31 anstelle einer Auslenkung eine Kraft, die sogenannte Blockierkraft FB. Wird sein bewegtes Ende 34 z.B. beweglich aber nicht drehbar, d.h. die Tangentenrichtung der Biegelinie wird von der mechanischen Anbindung festgelegt, angebunden, so erzeugt der Aktor 31 ebenfalls eine Auslenkung, die aber geringer ist als die oben definierte Leerlaufauslenkung x0. Biegeaktoren verhalten sich mechanisch näherungsweise wie eine Biegefeder mit einer Federrate c = FB / x0. Biegeaktoren können in ihrem mechanischen Verhalten sehr gut mit Hilfe der Bernoulli-Biegetheorie beschrieben werden, welche klar aufzeigt, dass die Form einer sich unter Last einstellenden Biegelinie durch die Randbedingungen bzw. vorliegend die mechanischen Einspannbedingungen festgelegt wird. Daher hängen die mit einem gegebenen Biegeaktor als den Aktoren 31 erreichbaren mechanischen Leistungsdaten von der mechanischen Anbindung an seine Umgebung ab.

In elektrischer Hinsicht verhält sich ein piezoelektrischer Biegeaktoren annähernd wie ein Kondensator mit einer Kapazität, mit typischen Werten im Bereich von ca. 0,01 bis 10 µF. Typische mechanische Leistungsdaten liegen für die Leerlaufauslenkung x0 im Bereich von 0,1 bis 2 mm, für die Blockierkraft FB im Bereich von 0,1 bis 10 N und für die Federrate im Bereich von 0,5 bis 5 N/mm.

Damit diese Leistungsdaten bei in einer mechanischen Vorrichtung verbauten Biegeaktoren als den Aktoren 31 erreicht werden, ist eine ortsfeste und drehsteife Fixierung der Aktoren 31 an deren ruhenden Enden 33 bezüglich deren Wirkrichtungen erforderlich.

Wird der Biegeaktor als Aktor 31 zur Erzeugung von Kräften bei gleichzeitig geringem Verschiebeweg eingesetzt, so ist eine ortsfeste aber drehbare Anbindung seines bewegten Endes 34 erforderlich. Wird der Biegeaktor zur Erzeugung von Auslenkung bei gleichzeitig geringer Kraft eingesetzt, so ist eine die Bewegung des bewegten Endes 34 des Aktors 31 nicht behindernde, drehbare mechanische Anbindung erforderlich.

Der leistungsoptimierte Arbeitspunkt von Biegeaktoren als den Aktoren 31 liegt in etwa bei halber Leerlaufauslenkung und halber Blockierkraft. Daher ist die mechanische Anbindung am bewegten Ende 34 einerseits mechanisch steif. Andererseits ist die mechanische Anbindung so gewählt, dass sie die Aktorauslenkung nicht behindert. Diesen Anforderungen genügt am besten das am bewegten Ende 34 des Aktors 31 montierte, spielfreie Drehgelenk 22 dessen Drehachse bezüglich Fig. 7 senkrecht zur schmal dargestellten Seite des Aktors 31 orientiert ist. Ein solches Drehgelenk 22 besonders gut erkennbar in Fig. 5 skizziert.

Fig. 8 zeigt in zur Veranschaulichung deutlich übertriebener Verstärkung die Deformation der Antriebseinheit 30, bei der das Basiselement bzw. die Basisplatte 10 fixiert ist und an die Antriebsplatte 23 eine Kraft in Wirkrichtung eines Paares von parallelwirkenden der Aktoren 31a, 31c angelegt wurde. Deutlich erkennbar ist die Biegung der in Kraftrichtung wirkenden Aktoren 31a, 31c und die gleichzeitige nahezu kraftfreie Neigung der orthogonal dazu wirkenden Aktoren 31b, 31d. Die gute Parallelführung der Antriebsplatte 23 im Bezug auf die Basisplatte 23 ist ebenfalls deutlich zu erkennen.

Die nachfolgend beschriebene Montagereihenfolge stellt nur eine beispielhafte Möglichkeit zur Montage dar. Der Eingriffskörper 51 mit der Innenverzahnung 52 wird koaxial in geeigneter axialer Position bzw. Höhe in das Gehäuse 60 eingesetzt und in diesem mechanisch steif fixiert.

Der Rotor 90 besteht aus der mit der Eingriffsscheibe 53 verbundenen Welle 40, wobei die Verbindung der beiden Elemente an dem von der Basisplatte 13 abgewandten Ende erfolgt. Der Außendurchmesser der Welle bildet dabei mit den Zentralbohrungen als Basisplattenlager 14 in der Basisplatte 13 und als Antriebsplatten-Lager 24 in der Antriebsplatte 23 jeweils eine spielfreie aber leichtdrehbare Drehlagerung z.B. in Form eines Gleitlagers aus. Zur Verbesserung der Standfestigkeit und zur Verringerung von Reibkräften können dort Beschichtungen und/oder Anordnungen zur Schmierung vorgesehen sein. Die Welle 40 ragt zum Anschluß von anzutreibenden Elementen nach unten über die Basisplatte 13 hinaus.

Die vormontierte Antriebseinheit 30 mit dem eingefügten Rotor 90 wird koaxial in das Gehäuse 60 mit dem darin ausgebildeten oder eingefügten Eingriffskörper 51 eingesetzt, so dass die Außenverzahnung 54 der Eingriffsscheibe 53 in Überdeckung mit der Innenverzahnung 52 des Eingriffskörpers 51 ist. Das Gehäuse 60 wird in dieser Lage mechanisch steif mit der Basisplatte 13 der Antriebseinheit 30 verbunden.

Zuletzt wird der Deckel 70 eingesetzt, der den Antrieb nach oben hin abschließt und die Verzahnungspaarung 50 vor Verunreinigung von außen schützt.

Alternativ kann z.B. eine bevorzugte Montagesequenz auch wie folgt durchgeführt werden. Nach dem Aufbau der Antriebseinheit 30 erfolgt der Einbau der Antriebseinheit 30 in das Gehäuse 60 einschließlich Verbindung der Basisplatte 14 mit dem Gehäuse 60. Dann wird der Rotor 90, d.h. die Einheit aus dem Eingriffskörper 51 mit der Welle 40, in die Antriebseinheit 30 respektive das Gehäuse 60 eingesetzt. Schließlich folgt das Aufsetzen des Deckels 70.

Die genaue Montagereihenfolge kann beispielsweise auch anders sein, wenn die Welle einen Durchmessersprung aufweist, und z.B. am Abtriebsende als Verstärkung einen größeren Durchmesser aufweist. In diesem Fall wird zunächst die Welle in die Antriebseinheit 30 gefügt. Anschließend wird die Eingriffsscheibe mit der Welle verbunden. Diese vormontierte Einheit wird als nächstes in das Gehäuse mit dem Eingriffskörper eingefügt und zuletzt der Deckel montiert.

Im strom- bzw. spannungslosen Grundzustand der Biegeaktoren nimmt die Eingriffsscheibe 53 gemäß Fig. 2 B-B vorzugsweise eine konzentrische Lage zum Eingriffskörper 51 ein. Durch von einer Steuereinrichtung geeignet angelegte, in etwa sinus- und kosinusförmige Steuerspannungen an den Aktoren 31 wird die Antriebsplatte 23 und mit ihr die in ihr drehbar gelagerte Welle 40 und die an diesem Ende der Welle 40 befestigte Eingriffsscheibe 53 in der Blattebene in eine translatorisch kreisförmige Verschiebebewegung versetzt, wobei die Außenverzahnung 54 der Eingriffsscheibe 53 in der Innenverzahnung 52 des Eingriffskörpers 51 abrollt und dadurch rotiert wird. Während des Durchlaufs einer Ansteuerperiode wird die Eingriffsscheibe 53 um einen Drehwinkel bewegt, der der Zahnzahldifferenz zwischen der Außenverzahnung und der Innenverzahnung entspricht. Die Drehgeschwindigkeit der Welle 40 wird durch die elektrische Steuerfrequenz bestimmt. Die Drehrichtung der Welle 40 wird durch die relative Phasenlage der Ansteuerspannungen, d.h. durch den Umlaufsinn der Verschiebebewegung der Eingriffsscheibe 53 festgelegt. Die Festkörpergelenke 41, 42 der Welle 40 gewährleisten eine ungehinderte Verschiebung der Eingriffsscheibe 53 durch die Welle 40. An der Welle 40 angreifende Drehmomentlasten werden durch die Festkörpergelenke 41, 42 an die Verzahnungspaarung 50 übertragen, vom Gehäuse 60 übernommen und an eine nicht dargestellt Antriebshalterung abgeführt. Aufgrund der Drehlagerung der Welle 40 in der Antriebsplatte 23, werden von Außen auf die Welle 40 wirkende Lastmomente nicht auf die Aktoren 31 übertragen.

Wenn die Zähnezahldifferenz zwischen der Außenverzahnung mit einer ersten Zähnezahl N2 und der Innenverzahnung mit einer zweiten Zähnezahl N1 gering gewählt ist, bei gleichzeitig hoher zweiter Zähnezahl N1, wird eine hohe Antriebsuntersetzung erreicht. Das Untersetzungsverhältnis Π wird definiert als Frequenz der Welle fM, bezogen auf die elektrische Ansteuerfrequenz fE zu Π = fM / fE = (N2- N1) / N1. Besonders bevorzugte Werte für das Untersetzungsverhältnis liegen im Bereich von 1:10 bis 1:1000.

Umsetzbar ist eine Vielzahl alternativer Ausgestaltungen. Beispielsweise kann ein zylindrisches Gehäuse mit einer innenseitigen Innenverzahnung anstelle des Eingriffskörpers 51 eingesetzt werden, so dass das Gehäuse bzw. dessen Innenverzahnung zugleich den Eingriffskörper ausbildet.

Die Basisplatte 13 kann nicht gezeigte zusätzliche Bohrungen enthalten, um die ebenfalls nicht gezeigten elektrischen Anschlußdrähte der Aktoren 31 nach außen zu führen.

Anstelle des zweiteiligen Rotors 90 aus der mit der Eingriffsscheibe 53 verbundenen Welle 40 kann auch ein einstückiger Rotor eingesetzt werden, welcher die Wellenachse und die Eingriffsscheibe in einem Stück ausbildet. Unter der Eingriffsscheibe wird insbesondere auch ein Körper verstanden, der drehfest mit der Welle verbunden ist und einen kreisförmigen Außenumfang aufweist ohne dabei als Vollkörper ausgebildet zu sein. Die Eingriffsscheibe kann somit auch als eine ringförmige Anordnung mit Speichen zu der Welle ausgebildet sein.

Anstelle der vier dargestellten Aktoren 31 können auch nur zwei, drei oder auch mehr als vier Aktoren eingesetzt werden. Entscheidend ist, dass diese so angesteuert werden können, dass deren Wirkrichtungen die Welle 40 und darüber die Eingriffsscheibe 53 in die translatorisch-kreisförmige Bewegung längs einer Kreisbahn versetzen können.

## Patentansprüche

1. Rotationsantrieb, aufweisend
- eine Welle (40), die in einem zu einem Basiselement (10) ortsfesten Lager (14) drehbar gelagert ist,
- einen ring- oder zylinderförmigen Eingriffskörper (51),
- eine innerhalb des Eingriffskörpers (51) liegende Eingriffsscheibe (53) mit einer zu einer Eingriffskörper-Innenwandung korrespondierenden und in Eingriff tretbaren Eingriffsscheiben-Außenwandung, wobei der Eingriffskörper (51) und/oder die Eingriffsscheibe (53) eine Antriebsebene (x, y) ausbilden, und
- zumindest zwei elektromechanischen Aktoren (31), deren Wirkrichtung jeweils mit einer Bewegungskomponente parallel zur Antriebsebene (x, y) und mit der jeweiligen Bewegungskomponente relativ zueinander orthogonal verläuft in der Antriebsebene (x, y), wobei ein Bewegungsbereich der Aktoren (31) durch das Zusammenwirken des Eingriffskörpers (51) und der Eingriffsscheibe (53) beschränkt wird,
**dadurch gekennzeichnet, dass**
- eine Antriebsplatte (23) mit einer Bewegungskomponente in einer Ebene parallel zur Antriebsebene (x, y) des Eingriffskörpers verschiebbar gelagert ist und mittels der Kraft- und/oder Bewegungskomponenten der Aktoren (31) parallel zur Antriebsebene (x, y) und relativ zu dem Basiselement (10) verstellbar ist und
- die Welle (40) vom ortsfesten Lager (14) beabstandet koaxial und rotationsfest mit der Eingriffsscheibe (53) ausgebildet ist und spielfrei aber drehbar in einem Antriebsplattenlager (24) in der Antriebsplatte (23) gelagert ist.

2. Rotationsantrieb nach Anspruch 1, durch gekennzeichnet, dass die Aktoren (31) und die Antriebsplatte (23) derart gekoppelt sind, dass mittels der Aktoren (31) die Antriebsplatte (23) zu einer kreisförmig translatorischen Verschiebebewegung angregbar ist und darüber die Welle (40) und die Eingriffsscheibe (53) so zu einer kreisförmig translatorischen Verschiebebewegung anregbar sind, dass die Eingriffsscheiben-Außenwandung der Eingriffsscheibe (53) in der Eingriffskörper-Innenwandung des Eingriffskörpers (51) abrollt und dass durch den Eingriff der Eingriffsscheiben-Außenwandung und der Eingriffskörper-Innenwandung die mit der Eingriffsscheiben-Außenwandung drehfest verbundene Welle (40) in Rotation versetzbar ist.

3. Rotationsantrieb nach einem vorstehenden Anspruch, **dadurch gekennzeichnet, dass** die Welle (40) in einem Abschnitt zwischen dem ortsfesten Lager (14) und dem mit der Antriebsplatte (23) transversal bewegbaren Antriebsplatten-Lager (24) seitlich ihrer Wellenachse (z) gelenkig oder biegbar ausgebildet ist.

4. Rotationsantrieb nach Anspruch 3, **dadurch gekennzeichnet, dass** die Welle (40) einen weiteren gelenkigen oder biegbaren Abschnitt aufweist, der beabstandet zu dem gelenkig oder biegbar ausgebildeten Abschnitt zwischen dem ortsfesten Lager (14) und dem mit der Antriebsplatte (23) transversal bewegbaren Antriebsplatten-Lager (24) seitlich ihrer Wellenachse (z) gelenkig oder biegbar ausgebildet ist.

5. Rotationsantrieb nach einem vorstehenden Anspruch, **dadurch gekennzeichnet, dass** die Welle (40) aus Sicht der Antriebsplatte (23) axial in Richtung der Wellenachse (z) über das ortsfest Lager (14) hinaus verlängert ist und am verlängerten Abschnitt der Welle (40) ein anzutreibendes Element angekoppelt ist, wobei das anzutreibende Element derart relativ zum Basiselement (10) angeordnet ist, dass von außen auf die Welle (40) einwirkende Querkräfte abgefangen werden.

6. Rotationsantrieb nach einem vorstehenden Anspruch, **dadurch gekennzeichnet, dass** die elektromechanischen Aktoren (31) piezoelektrische Aktoren, elektrostriktive Aktoren oder magnetostriktive Aktoren sind.

7. Rotationsantrieb nach einem vorstehenden Anspruch, **dadurch gekennzeichnet, dass** die elektromechanischen Aktoren (31) Biegeaktoren in Streifenform sind.

8. Rotationsantrieb nach einem vorstehenden Anspruch, **dadurch gekennzeichnet, dass** die Aktoren (31) in einem Abschnitt zwischen der Antriebsplatte (23) und dem ortsfesten Lager (14) in ihrer Biege- oder Längsdimension in etwa parallel zur Wellenachse (z) ausgerichtet sind.

9. Rotationsantrieb nach einem vorstehenden Anspruch, **dadurch gekennzeichnet, dass** zumindest einer der Aktoren (31), insbesondere alle der Aktoren (31), mittels eines gelenkigen Abschnitts an der Antriebsplatte (23) und/oder relativ zum Basiselement (10) befestigt sind.

10. Rotationsantrieb nach Anspruch 9, **dadurch gekennzeichnet, dass** solche gelenkige Abschnitte als schersteife Festkörperkugelgelenke (22) oder schersteife radiale Festkörpergelenke (12) ausgebildet sind.

11. Rotationsantrieb nach einem vorstehenden Anspruch, **dadurch gekennzeichnet, dass** jeweils zwei im Bezug auf die Welle (40) einander gegenüberliegende Aktoren (31) ein Paar von orthogonal wirkenden Biegeaktoren bilden, die in ihrer Längsdimension in etwa parallel zur Wellenachse (z) ausgerichtet sind.

12. Rotationsantrieb nach einem vorstehenden Anspruch mit einer Steuereinrichtung, die ausgebildet und/oder programmiert ist zum Ansteuern der kreisförmigen Verschiebebewegung derart, dass bei jeder beliebigen kreisförmig translatorischen Position, insbesondere Winkelposition der Antriebsplatte (23) oder der Eingriffsscheibe (53) relativ zum Eingriffskörper (51) die kreisförmige Verschiebebewegung schneller als eine Millisekunde gestoppt, neu gestartet oder reversiert werden kann.

13. Rotationsantrieb nach einem vorstehenden Anspruch, **dadurch gekennzeichnet, dass** der ring- oder zylinderförmige Eingriffskörper eine Innenverzahnung aufweist und die Eingriffsscheibe eine dazu korrespondierende Außenverzahnung aufweist.

14. Rotationsantrieb nach einem vorstehenden Anspruch, **dadurch gekennzeichnet, dass** die Welle (40) einen gelenkigen Abschnitt aus zwei orthogonal zueinander und senkrecht zur Wellenachse (z) wirkende, hintereinander angeordnete Festkörpergelenke (41, 42) aufweist.

## Claims

1. Rotational drive having
- a shaft (40) which is mounted to be rotatable in a bearing (14) which is fixed with respect to a base element (10),
- an annular or cylindrical engagement body (51),
- an engagement disc (53) lying within the engagement body (51) and having an engagement disc outer wall corresponding to and engageable with an engagement body inner wall, wherein the engagement body (51) and/or the engagement disc (53) form a drive plane (x, y), and
- at least two electromechanical actuators (31), the effective direction of which runs in each case with a movement component parallel to the drive plane (x, y) and with the particular movement component orthogonally relative to one another in the drive plane (x, y), wherein a movement range of the actuators (31) is restricted by the cooperation of the engagement body (51) and the engagement disc (53),
**characterised in that**
- a drive plate (23) is mounted to be displaceable with a movement component in a plane parallel to the drive plane (x, y) of the engagement body and by means of the force components and/or movement components of the actuators (31) can be adjusted parallel to the drive plane (x, y) and relative to the base element (10) and
- the shaft (40) is distanced from the fixed bearing (14) coaxially and is designed to be resistant to rotation with the engagement disc (53) and is mounted to be clearance-free but rotatable in a drive plate bearing (24) in the drive plate (23).

2. Rotational drive according to claim 1, **characterised in that** the actuators (31) and the drive plate (23) are coupled such that by means of the actuators (31), the drive plate (23) can be stimulated to form a circular translational displacement movement and thereby the shaft (40) and the engagement disc (53) can be stimulated to form a circular translational displacement movement so that the engagement disc outer wall of the engagement disc (53) rolls in the engagement body inner wall of the engagement body (51) and that by the engagement of the engagement disc outer wall and the engagement body inner wall, the shaft (40), connected to be resistant to rotation with the engagement disc outer wall, can be rotated.

3. Rotational drive according to a preceding claim, **characterised in that** the shaft (40) is designed to be flexible or pliable laterally of its shaft axis (z) in a section between the fixed bearing (14) and the drive plate bearing (24) which can be moved transversally with the drive plate (23).

4. Rotational drive according to claim 3, **characterised in that** the shaft (40) has a further flexible or pliable section which is designed to be flexible or pliable laterally of its shaft axis (z) spaced from the section designed to be flexible and pliable between the fixed bearing (14) and the drive plate bearing (24) which can be moved transversally with the drive plate (23).

5. Rotational drive according to a preceding claim, **characterised in that** the shaft (40), from the view of the drive plate (23), is extended axially in the direction of the shaft axis (z) beyond the fixed bearing (14) and an element to be driven is coupled to the extended section of the shaft (40), wherein the element to be driven is arranged relative to the base element (10) such that transverse forces acting externally on the shaft (40) are absorbed.

6. Rotational drive according to a preceding claim, **characterised in that** the electromechanical actuators (31) are piezoelectric actuators, electrostrictive actuators or magnetostrictive actuators.

7. Rotational drive according to a preceding claim, **characterised in that** the electromechanical actuators (31) are pliable actuators in strip form.

8. Rotational drive according to a preceding claim, **characterised in that** the actuators (31) are aligned in their pliable dimension or longitudinal dimension approximately parallel to the shaft axis (z) in a section between the drive plate (23) and the fixed bearing (14).

9. Rotational drive according to a preceding claim, **characterised in that** at least one of the actuators (31), in particular all of the actuators (31), are attached by means of a flexible section to the drive plate (23) and/or relative to the base element (10).

10. Rotational drive according to claim 9, **characterised in that** such flexible sections are designed as solid-state universal joints (22) which are resistant to shearing or radial solid-state joints (12) which are resistant to shearing.

11. Rotational drive according to a preceding claim, **characterised in that** in each case two actuators (31) which are opposite one another with respect to the shaft (40) form a pair of orthogonally acting pliable actuators which are aligned approximately parallel to the shaft axis (z) in their longitudinal dimension.

12. Rotational drive according to a preceding claim having a control device which is designed and/or programmed to activate the circular displacement movement such that for any circular translational position, in particular angular position of the drive plate (23) or of the engagement disc (53) relative to the engagement body (51), the circular displacement movement may be stopped, re-started or reversed more rapidly than a millisecond.

13. Rotational drive according to a preceding claim, **characterised in that** the annular or cylindrical engagement body has inner gearing and the engagement disc has outer gearing corresponding thereto.

14. Rotational drive according to a preceding claim, **characterised in that** the shaft (40) has a flexible section comprising two solid-state joints (41, 42) arranged one behind another and acting orthogonally to one another and vertically to the shaft axis (z).

## Revendications

1. Entraînement rotatif, comportant :
- un arbre (40), qui est positionné rotativement dans un palier (14) fixe par rapport à un élément de base (10),
- un corps d'engrènement (51) de forme annulaire ou cylindrique,
- un disque d'engrènement (53) reposant à l'intérieur du corps d'engrènement (51) avec une paroi extérieure de disque d'engrènement venant en contact avec et correspondant à une paroi intérieur du corps d'engrènement, dans lequel le corps d'engrènement (51) et/ou le disque d'engrènement (53) forment un plan d'entraînement (x, y), et
- au moins deux actionneurs électromécaniques (31), dont la direction opérationnelle s'étend respectivement avec un composant de mouvement parallèlement au plan d'entraînement (x, y) et avec le composant de mouvement respectif orthogonalement l'un par rapport à l'autre dans le plan d'entraînement (x, y), dans lequel une plage de mouvement des actionneurs (31) est limitée par la coopération du corps d'engrènement (51) et du disque d'engrènement (53),
**caractérisé en ce que**
- une plaque d'entraînement (23) est positionnée de manière déplaçable avec un composant de mouvement dans un plan parallèle au plan d'entraînement (x, y) du corps d'engrènement et est ajustable au moyen des composants de force et/ou mouvement des actionneurs (31) parallèlement au plan d'entraînement (x, y) et relativement à l'élément de base (10) et
- l'arbre (40) est formé à distance coaxiale du palier fixe (14) et solidaire en rotation avec le disque d'engrènement (53) et est positionné sans jeu mais rotativement dans un palier de plaque d'entraînement (24) dans la plaque d'entraînement (23).

2. Entraînement rotatif selon la revendication 1, **caractérisé en ce que** les actionneurs (31) et la plaque d'entraînement (23) sont couplés de telle sorte que, au moyen des actionneurs (31), la plaque d'entraînement (23) puisse être activée en un mouvement de déplacement circulaire par translation et au-dessus l'arbre (40) et le disque d'engrènement (53) puissent être ainsi activés en un mouvement de déplacement circulaire par translation, de telle sorte que la paroi extérieure de disque d'engrènement du disque d'engrènement (53) roule dans la paroi intérieure de corps d'engrènement du corps d'engrènement (51) et que du fait de la mise en prise de la paroi extérieure de disque d'engrènement et de la paroi intérieure de corps d'engrènement, l'arbre (40) relié de manière solidaire en rotation à la paroi extérieure du disque d'engrènement puisse être entraîné en rotation.

3. Entraînement rotatif selon une revendication précédente, **caractérisé en ce que** l'arbre (40) est formé de manière articulée ou flexible latéralement à son axe d'arbre (z) dans une portion entre le palier fixe (14) et le palier de plaque d'entraînement (24) mobile transversalement avec la plaque d'entraînement (23).

4. Entraînement rotatif selon la revendication 3, **caractérisé en ce que** l'arbre (40) comprend une autre portion articulée ou flexible, qui est formée de manière articulée ou flexible à distance par rapport à la portion formée de manière articulée ou flexible entre le palier fixe (14) et le palier de plaque d'entraînement (24) mobile transversalement avec la plaque d'entraînement (23) latéralement à son axe d'arbre (z).

5. Entraînement rotatif selon une revendication précédente, **caractérisé en ce que** l'arbre (40) du côté de la plaque d'entraînement (23) est en outre prolongé axialement dans la direction de l'axe d'arbre (z) par-dessus le palier fixe (14) et un élément entraîneur est couplé à la portion prolongée de l'arbre (40), dans lequel l'élément entraîneur est disposé relativement à l'élément de base (10) de telle sorte que les forces transversales agissant sur l'arbre (40) soient interceptées de l'extérieur.

6. Entraînement rotatif selon une revendication précédente, **caractérisé en ce que** les actionneurs électromécaniques (31) sont des actionneurs piézoélectriques, des actionneurs électrostrictifs ou des actionneurs magnétostrictifs.

7. Entraînement rotatif selon une revendication précédente, **caractérisé en ce que** les actionneurs électromécaniques (31) sont des actionneurs flexibles sous forme de bande.

8. Entraînement rotatif selon une revendication précédente, **caractérisé en ce que** les actionneurs (31) sont alignées dans une portion entre la plaque d'entraînement (23) et le palier fixe (14) dans leur dimension longitudinale ou de flexion approximativement parallèlement à l'axe d'arbre (z).

9. Entraînement rotatif selon une revendication précédente, **caractérisé en ce que** au moins un des actionneurs (31), notamment tous les actionneurs (31), sont fixés au moyen d'une portion articulée sur la plaque d'entraînement (23) et/ou relativement à l'élément de base (10).

10. Entraînement rotatif selon la revendication 9, **caractérisé en ce que** de telles portions articulées sont formées comme des articulations sphériques solides (22) rigides au cisaillement ou des articulations solides radiales (12) rigides au cisaillement.

11. Entraînement rotatif selon une revendication précédente, **caractérisé en ce que** respectivement deux actionneurs (31) situés en vis-à-vis l'un de l'autre par rapport à l'arbre (40) forment une paire d'actionneurs flexibles à action orthogonale, qui sont alignés dans leur dimension longitudinale approximativement parallèlement à l'axe d'arbre (z).

12. Entraînement rotatif selon une revendication précédente comportant un dispositif de commande, qui est formé et/ou programmé pour commander le mouvement de déplacement circulaire de telle sorte que à chaque position de translation circulaire au choix, notamment position angulaire de la plaque d'entraînement (23) ou du disque d'engrènement (53) relativement au corps d'engrènement (51), le mouvement de déplacement circulaire puisse être arrêté, redémarré ou inversé plus rapidement qu'une milliseconde.

13. Entraînement rotatif selon une revendication précédente, **caractérisé en ce que** le corps d'engrènement de forme annulaire ou cylindrique comprend une denture interne et le disque d'engrènement comprend une denture externe correspondante.

14. Entraînement rotatif selon une revendication précédente, **caractérisé en ce que** l'arbre (40) comprend une portion articulée composée de deux articulations solides (41,42) disposées l'une derrière l'autre, agissant orthogonalement l'une par rapport à l'autre et perpendiculairement à l'axe d'arbre (z).
